# EUROPEAN PATENT APPLICATION

(11) **EP 0 616 910 A1**
(43) Date of publication of application: **28.09.1994**
(21) Application number: 94500051.1
(22) Date of filing: 21.03.1994
(51) Int. Cl.: B60C 27/04

(54) **Anti-slip device applicable to automobile wheels**

(30) Priority: 22.03.1993 ES 9300741 U
(71) Applicant: Bosch Janer, Jordi, E-08191 Barcelona (ES)
(72) Inventor: Bosch Janer, Jordi, E-08191 Barcelona (ES)
(74) Representative: Flaccus, Rolf-Dieter, Dr.

(57) **Abstract**

Anti-slip device applicable to automobile wheels. It is made up an elongate rectangular member -1- provided at its ends with two arms -2- and -3-, one of which can articulate in an "F" direction, adopting a configuration similar to a "U", suitable for clamping around the wheel -5-.

The purpose of the device is to prevent automobile wheels skidding on mud, sand or similar surfaces.

## Description

The present invention relates to an anti-slip device applicable to the wheels of automobiles.

More specifically, the invention consists of a device especially designed to prevent vehicle wheels skidding on mud, sand or similar surfaces, allowing the wheels to rotate with traction under such adverse conditions for a sufficient distance to emerge from the obstacle.

The device is designed for the above uses, although it could also be applied effectively for driving on snow and ice, utilizing for that purpose several units per wheel.

Along general lines, the device comprises a main rectangular member which is attached transversally across the tread of the tyre. This member is provided with a surface made up of nylon, iron or rubber relief projections or studs which make contact with the ground. The ends of the member have respective metallic arms which are secured to the wheel rim, one of these arms being articulated to facilitate the fitting and removal procedure for the device.

In order to aid understanding, the present description is accompanied by a sheet of drawings showing an embodiment of the device by way of example.

In the drawings:

Figure 1 is a perspective view of the device of the invention.

Figure 2 shows the device fitted to the wheel of an automobile, the wheel being shown in section.

Figure 3 shows a wheel equipped with the device.

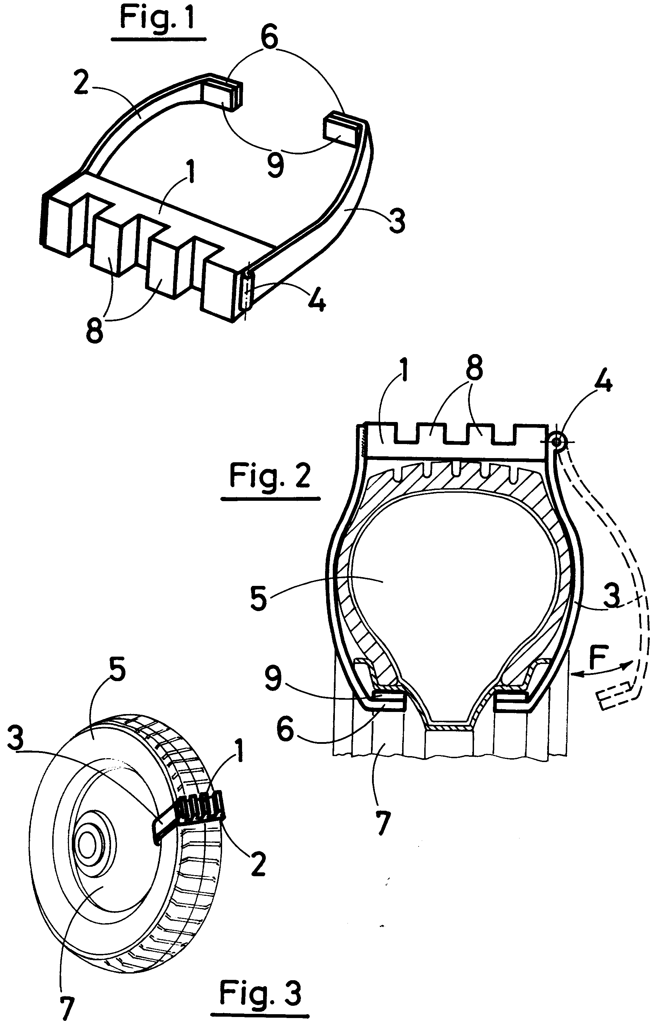

With reference to the figures, the embodiment shows an anti-slip device for automobile wheels, comprising a mainelongate rectangular member -1-, provided at the ends thereof with two arms -2- and -3-, one of which has a hinge -4- at its joint with the member -1-, which permits articulation of the arm in the direction "F". The device as a whole is provided with a configuration similar to a "U", suitable for clamping around the wheel -5-, as illustrated in Figures 2 and 3, to which end the arms -2- and -3- have feet -6- at their ends, bent at an angle, which feet are fixed onto the profile of the wheel rim -7-, this arrangement being facilitated by the articulated outer arm -3- and by the special geometry of the arms, which fit around the side walls of the tyre.

The member -1- is provided with nylon, iron or rubber studs -8- to enhance grip. The arms -2- and -3- are of metallic material, preferably aluminium or iron, while the two feet -6- bear respective parts -9- made of nylon or similar material.

## Claims

1. Anti-slip device applicable to automobile wheels, **characterized** essentially in that it is made up of a "U"-shaped body whose base (1) is formed by a rectangular member having a surface provided with studs (8) having an anti-slip function, with one of the arms (3) of said "U" being provided at its union with the aforesaid base (1) with a hinge (4) which permits it to swivel in order to facilitate fitting of the device on the wheel of the vehicle, in such a way that the said base (1) is situated transversally to the tyre tread, in a position to contact the ground.

2. The anti-slip device applicable to automobile wheels of Claim 1, **characterized** in that the two arms (2) and (3) are provided at each of their open ends with feet (6) which engage the wheel rim profile.

3. The anti-slip device applicable to automobile wheels of Claims 1 and 2, **characterized** in that the functional position of foot (6) of the arm can be adjusted to fit all types of wheel rims.

4. The anti-slip device applicable to automobile wheels of Claims 1 to 3, **characterized** in that the arm (2) is of a shorter length than that of the arm (3) and lacks the corresponding foot (6), so that it does not obstruct the disc brakes of the wheel.

5. The anti-slip device applicable to automobile wheels of Claims 1 to 4, **characterized** in that the side of the member (1) in contact with the tread of the tyre (5) is provided with a plurality of relief parts which fit into the incut pattern of said tread in order to facilitate positioning of the said member (1).
